(19) Europäisches Patentamt
European Patent Office
Office européen des brevets

(11) **EP 4 557 167 A1**

(12) **EUROPEAN PATENT APPLICATION**

(43) Date of publication:
**21.05.2025 Bulletin 2025/21**

(21) Application number: **24213880.8**

(22) Date of filing: **19.11.2024**

(51) International Patent Classification (IPC):
**G06N 3/0464** (2023.01)      **G06N 3/0495** (2023.01)

(52) Cooperative Patent Classification (CPC):
**G06N 3/0464; G06N 3/0495**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.11.2023 KR 20230161216**

(71) Applicants:
• **Samsung Electronics Co., Ltd.
Suwon-si, Gyeonggi-do 16677 (KR)**
• **Korea Advanced Institute of Science and
Technology
Daejeon 34141 (KR)**

(72) Inventors:
• **Cho, Yeongon
16678 Suwon-si, Gyeonggi-do (KR)**
• **Han, Yunki
34141 Daejeon (KR)**
• **Kim, Lee-Sup
34141 Daejeon (KR)**

(74) Representative: **Grünecker Patent- und
Rechtsanwälte
PartG mbB
Leopoldstraße 4
80802 München (DE)**

(54) **PROCESSING APPARATUS AND DATA PROCESSING METHOD THEREOF FOR
GENERATING A NODE EMBEDDING USING A GRAPH CONVOLUTIONAL NETWORK (GCN)
MODEL**

(57)    Embodiments of the present disclosure describe a processing apparatus that may obtain embedding information of a first node to be added to a graph and connection information between the graph and the first node, receive, supernode information for a supernode of a compressed graph corresponding to the graph, wherein the supernode includes a plurality of nodes from the graph, and generate modified embedding information of the first node based on the supernode information, the initial embedding information, and the connection information using a graph convolutional network (GCN) model.

Processing apparatus 910

Connection information and embedding information of new node → GCN model 920

Compressed graph 610 → GCN model 920

GCN model 920 → Inference result

**FIG. 9**

**Description**

BACKGROUND

1. Field of the Invention

The following disclosure relates to a processing apparatus, a data processing method thereof, and a method of training a graph convolutional network (GCN) model.

2. Description of the Related Art

Modern computing systems face increasing challenges in efficiently processing large-scale graph data, which is prevalent in various domains such as social networks, recommendation systems, etc. Existing methods are often unable to handle the irregular and sparse nature of graph structures, resulting in suboptimal performance and scalability issues. Graph Convolutional Networks (GCNs) have demonstrated capabilities in tasks such as node classification, link prediction, and graph generation.

However, the training and inference processes of GCNs can be computationally intensive, particularly for large-scale graphs with millions or billions of nodes and edges. Conventional computing architectures may struggle to handle the computational requirements of GCNs efficiently, resulting in prolonged training times and limited scalability. Therefore, there is a need in the art for systems and methods that can efficiently train and deploy GCN models on large-scale graph data while addressing the computational complexity and scalability challenges associated with existing approaches.

SUMMARY

The invention is claimed in the independent claims. Preferred embodiments are specified in the dependent claims.

The present disclosure describes systems and methods for data processing. Embodiments of the disclosure include a method for training a large-scale graph convolutional network (GCN) model based on a compressed graph. In some cases, the compressed graph comprises a plurality of supernodes and superedges generated by grouping the nodes of a graph. One or more embodiments include addition of a new node based on aggregation of a supernode and/or a superedge using the GCN model.

According to an aspect, there is provided a data processing method of a processing apparatus including obtaining embedding information of a first node to be added to a graph and connection information between the graph and the first node, receiving supernode information for a supernode of a compressed graph corresponding to the graph, wherein the supernode includes a plurality of nodes from the graph, and generating, using a graph convolutional network (GCN) model, modified embedding information of the first node based on the supernode information, the embedding information, and the connection information.

The generating of the embedding information may include obtaining a first result by performing a first aggregation on the embedding information, the supernode information, and the connection information, and obtaining a second result by performing a second aggregation on the embedding information and additional supernode information for a neighboring supernode connected to the supernode when a supernode to which the second node belongs has no self-edge.

The generating of the embedding information may include correcting the first result based on correction information, wherein the correction information indicates a difference between a connection relationship of the compressed graph and a connection relationship of the graph.

The correcting the first result may include adding additional embedding information of one or more nodes on a first edge to the first result when the first edge is removed from the compressed graph.

The correcting the first result may include subtracting embedding information of one or more nodes on a second edge from the first result when the second edge is added to the compressed graph.

The generating of the embedding information may include determining whether the neighboring supernode has a self-edge, wherein the second aggregation is based on the determination.

According to an aspect, there is provided a processing apparatus including a first buffer configured to store supernode information of a compressed graph, wherein the compressed graph includes a supernode corresponding to a plurality of nodes of a graph, a second buffer configured to store embedding information of a first node of the graph, and an operation circuit configured to obtain the supernode information from the first buffer, obtain the embedding information from the second buffer, obtain connection information between the first node and a second node, and generate modified embedding information of the first node based on the supernode information and the embedding information using a GCN model.

The operation circuit may be further configured to obtain a first result by performing a first aggregation on the embedding information, the supernode information, and the embedding information, and obtain a second result by performing a second aggregation on the embedding information and additional supernode information for a neighboring supernode connected to the supernode.

The operation circuit may be further configured to correct the first result based on the correction information, wherein the correction information indicates a difference between a connection relationship of the compressed graph and a connection relationship of the graph.

The operation circuit may be further configured to add additional embedding information of a one or more nodes on a first edge to the first result when the first edge is removed from the compressed graph.

The operation circuit may be further configured to subtract embedding information of one or more nodes on a second edge from the first result when the second edge is added to the compressed graph.

The operation circuit may be further configured to determine whether the neighboring supernode has a self-edge, wherein the second aggregation is based on the determination.

The operation circuit may be further configured to determine the embedding information of the first node based on the first result and the second result.

The determined embedding information may correspond to embedding information represented as the first node is connected to the graph.

The processing apparatus may be included in a processing-near-memory (PNM) device.

According to an aspect, there is provided a method of training a GCN model, the method including compressing a graph to obtain a compressed graph, wherein the compressed graph may include a supernode representing a plurality of nodes of the graph and a superedge representing a plurality of edges of the graph, performing aggregation based on the supernode and the superedge of the compressed graph, and correcting a result of the aggregation based on correction information, wherein the correction information indicates a difference between a connection relationship of the compressed graph and a connection relationship of the graph.

The performing of the aggregation may include obtaining embedding information for a node of the plurality of nodes in the supernode, determining supernode information for the supernode based on the embedding information, and updating the supernode information based on the superedge.

The correcting the result of the aggregation may include adding additional embedding information to the supernode information when the correction information indicates that an edge of the graph is removed from the compressed graph.

The correcting the result of the aggregation may include subtracting embedding information of one or more nodes on the second edge from supernode information when the correction information indicates that an edge is added to the compressed graph .

According to an aspect, there is provided a method comprising obtaining embedding information for a node of a graph; compressing a graph to obtain a compressed graph, wherein the graph is compressed by grouping a plurality of nodes of the graph to form a supernode of the compressed graph; and generating, using a graph convolutional network (GCN) model, modified embedding information for the node based on the embedding information and the compressed graph.

The method further comprises iteratively updating the compressed graph by repeatedly computing a memory requirement of the compressed graph and grouping additional nodes of the graph if the memory requirement exceeds a memory capacity.

The method of compressing the graph further comprises performing homophily-based node division and performing a node merge of the plurality of nodes based on the homophily-based node division.

Additional aspects of embodiments will be set forth in part in the description which follows and, in part, will be apparent from the description, or may be learned by practice of the disclosure.

An embodiment may enable large-scale GCN training in a hardware environment with large constraints to memory capacity.

An embodiment may provide an operation with maximized data reuse of GCN operations based on a compressed graph, thereby increasing the efficiency of large-scale GCN processing.

BRIEF DESCRIPTION OF THE DRAWINGS

These and/or other aspects, features, and advantages of the invention will become apparent and more readily appreciated from the following description of embodiments, taken in conjunction with the accompanying drawings:

FIGS. 1 and 2 illustrate a method of training a graph convolutional network (GCN) model according to an embodiment;
FIGS. 3 to 6 illustrate a graph compression process according to an embodiment;
FIGS. 7 and 8 illustrate a compressed graph-based aggregation method according to an embodiment;
FIGS. 9 to 11 illustrate an example of performing inference using a GCN model using a processing apparatus;

FIG. 12 is a block diagram illustrating a dual in-line memory module (DIMM) according to an embodiment;

FIG. 13 is a block diagram illustrating a processing-near-memory (PNM) module according to an embodiment;

FIG. 14 is a flowchart illustrating an operating method of a processing apparatus according to an embodiment; and

FIG. 15 is a block diagram illustrating an example of a configuration of a processing apparatus according to an embodiment.

FIG. 16 is a flowchart illustrating an operating method of a processing apparatus according to an embodiment.

DETAILED DESCRIPTION

The present disclosure describes systems and methods for data processing. Embodiments of the disclosure include a method for training a large-scale graph convolutional network (GCN) based on a compressed graph. In some cases, the compressed graph comprises a plurality of supernodes and superedges generated by grouping the nodes of a graph. One or more embodiments include addition of a new node based on aggregation of a supernode and/or a superedge using a GCN model.

Existing industry-level large-scale graphs (e.g., social graphs, web graphs, etc.) comprise large-scale (e.g., billion-scale) nodes and large-scale (e.g., trillion-scale) edges. Accordingly, such graphs may have enormous sizes ranging from hundreds of gigabytes (GB) to tens of terabytes (TB). Training such large-scale graphs may require a substantial amount of memory. Thus, existing large-scale graph convolutional network (GCN) model training techniques require an expansion of memory space to meet the training requirements. Additionally, such techniques use multiple physically independent memories.

In cases of existing methods of learning large-scale graphs, such as a web graph or an SNS graph, which require large memory capacities, the graphs may be divided into a number of compute nodes or devices followed by performing a division operation on a subgraph using storage. Such operations result in large data communication in the GCN training. In some cases, the GCN training methods may not consider edges which include a significant proportion of the input graph.

Embodiments of the present disclosure include a method for training a GCN model designed to overcome the limitations of conventional computing architectures in handling large-scale graph data. According to an embodiment, the training method compresses an input graph considering the provided memory size and based on node embedding and edges, thereby minimizing operations using characteristics of a compressed graph.

In some cases, the method enables efficient processing of graph data by integrating processing units directly within or in close proximity to memory modules. Accordingly, the PNM method significantly enhances the performance and scalability of GCN training and inference tasks by reducing latency and improving energy efficiency.

The present disclosure describes a method of training a large-scale GCN using a compressed graph. In some cases, the compressed graph may be generated by compressing, using a lossless compression method, a large-scale graph including a plurality of nodes and a plurality of edges. In some cases, the generated compressed graph includes supernodes and superedges. For example, the supernodes are generated based on grouping the nodes of the large-scale graph.

According to an embodiment, the method of training a GCN includes performing an aggregation operation based on nodes included in each supernode of the compressed graph. For example, the aggregation operation may be referred to as a supernode aggregation. In some cases, a supernode term that may be iteratively used in the process of training the CGN model may be generated. In some cases, the method of training the GCN further includes an aggregation operation based on the superedges and aggressively uses a supernode term. For example, the aggregation operation may be referred to as a superedge aggregation.

Additionally, the aggregation is followed by performing an addition or deletion of the (remaining) correction edges to obtain a final value. In some cases, large-scale GCN training methods may be divided into methods of storing the entire graph in a host memory with a large capacity, receiving subgraphs to be computed from the host memory, and processing the subgraphs, and methods of distributing graphs to multiple devices and processing the graphs.

Accordingly, by performing the multi-step aggregation operation including a supernode aggregation and a superedge aggregation using a compressed graph as input, as well as use of the supernode term, embodiments of the present disclosure are able to efficiently reduce the number of operations. Additionally, by incorporating such graph based computations, embodiments are able to efficiently handle the computational requirements of GCNs resulting in prolonged training times and limited scalability.

Embodiments of the present disclosure include a data processing method of a processing apparatus comprising obtaining embedding information of a first node to be added to a graph and connection information between the graph and the first node. The method further includes receiving supernode information for a supernode of a compressed graph corresponding to the graph, wherein the supernode includes a plurality of nodes from the graph. Additionally, a graph convolutional network (GCN) model generates modified embedding information of the first node based on the supernode information, the embedding information, and the connection information.

Accordingly, a method is provided that includes obtaining embedding information for a node of a graph and then compressing a graph to obtain a compressed graph. For example, the graph is compressed by grouping a plurality of nodes of the graph to form a supernode of the compressed graph. An embodiment includes a graph convolutional network (GCN) model that generates modified embedding information for the node based on the embedding information and the compressed graph.

The following detailed structural or functional description is provided as an example only and various alterations and modifications may be made to the embodiments. Here, the embodiments are not construed as limited to the disclosure and should be understood to include all changes, equivalents, and replacements within the idea and the technical scope of the disclosure.

Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component.

As used herein, the singular forms "a", "an", and "the" include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, embodiments will be described in detail with reference to the accompanying drawings. When describing the embodiments with reference to the accompanying drawings, like reference numerals refer to like elements and any repeated description related thereto will be omitted.

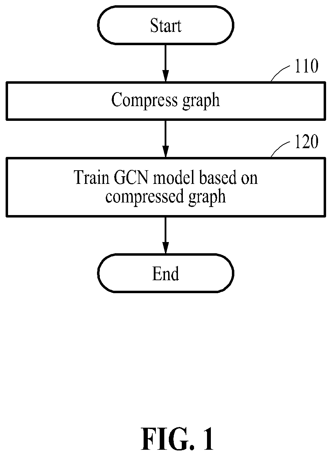

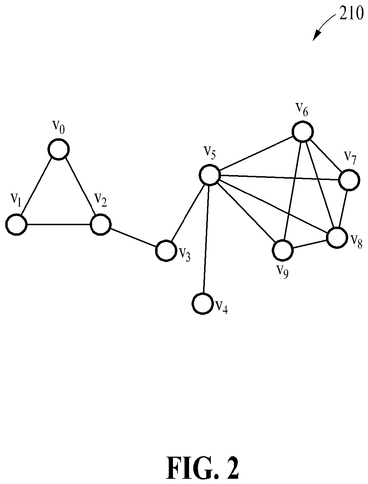

FIGS. 1 and 2 are diagrams illustrating a method of training a graph convolutional network (GCN) model according to an embodiment.

According to an embodiment, a method of training a GCN model may be performed by a training device (or a computing device). The GCN model may be a large-scale GCN, but is not limited thereto.

A machine learning model comprises machine learning parameters, also known as model parameters or weights, are variables that provide a behavior and characteristics of a machine learning model. Machine learning parameters can be learned or estimated from training data and are used to make predictions or perform tasks based on learned patterns and relationships in the data. Machine learning parameters are typically adjusted during a training process to minimize a loss function or maximize a performance metric. The goal of the training process is to find optimal values for the parameters that allow the machine learning model to make accurate predictions or perform well on the given task.

For example, during the training process, an algorithm adjusts machine learning parameters to minimize an error or loss between predicted outputs and actual targets according to optimization techniques like gradient descent, stochastic gradient descent, or other optimization algorithms. Once the machine learning parameters are learned from the training data, the machine learning parameters are used to make predictions on new, unseen data.

Artificial neural networks (ANNs) have numerous parameters, including weights and biases associated with each neuron in the network, that control a degree of connections between neurons and influence the neural network's ability to capture complex patterns in data. An ANN is a hardware component or a software component that includes a number of connected nodes (i.e., artificial neurons) that loosely correspond to the neurons in a human brain. Each connection, or edge, transmits a signal from one node to another (like the physical synapses in a brain). When a node receives a signal, it processes the signal and then transmits the processed signal to other connected nodes.

In some cases, the signals between nodes comprise real numbers, and the output of each node is computed by a function of the sum of its inputs. In some examples, nodes may determine their output using other mathematical algorithms, such as selecting the max from the inputs as the output, or any other suitable algorithm for activating the node. Each node and edge are associated with one or more node weights that determine how the signal is processed and transmitted.

In ANNs, a hidden (or intermediate) layer includes hidden nodes and is located between an input layer and an output layer. Hidden layers perform nonlinear transformations of inputs entered into the network. Each hidden layer is trained to produce a defined output that contributes to a joint output of the output layer of the ANN. Hidden representations are machine-readable data representations of an input that are learned from hidden layers of the ANN and are produced by the output layer. As the understanding of the ANN of the input improves as the ANN is trained, the hidden representation is progressively differentiated from earlier iterations.

During a training process of an ANN, the node weights are adjusted to improve the accuracy of the result (i.e., by minimizing a loss which corresponds in some way to the difference between the current result and the target result). The weight of an edge increases or decreases the strength of the signal transmitted between nodes. In some cases, nodes have a threshold below which a signal is not transmitted at all. In some examples, the nodes are aggregated into layers. Different layers perform different transformations on their inputs. The initial layer is known as the input layer and the last layer is known as the output layer. In some cases, signals traverse certain layers multiple times.

A GCN is a type of neural network that defines convolutional operation on graphs and uses their structural information. For example, a GCN may be used for node classification (e.g., documents) in a graph (e.g., a citation network), where labels are available for a subset of nodes using a semi-supervised learning approach. A feature description for every node is summarized in a matrix and uses a form of pooling operation to produce a node level output. In some cases, GCNs use dependency trees which enrich representation vectors for aspect terms and search for sentiment polarity of an input phrase/sentence.

A training or computing device for GCNs may employ specialized hardware optimized for the unique computational requirements of graph-based neural networks. The device features high parallelism to efficiently process large-scale graph data and performs iterative graph convolutions. The device integrates advanced memory management and data caching techniques to handle the irregular and sparse nature of graph structures. Additionally, it may include dedicated accelerators for graph-specific operations such as node aggregation and message passing. In some cases, the device facilitates rapid training and inference of GCNs, enabling applications in diverse fields like social network analysis, recommendation systems, etc.

In operation 110, the training device may compress a graph. The training device may compress the graph to a level to avoid a memory shortage in the memory capacity of the hardware. In some examples, the graph may be a large-scale graph (e.g., a social graph, a web graph, etc.). In some examples, the graph may include a plurality of nodes (e.g., billion-scale nodes) and a plurality of edges (e.g., trillion-scale edges). As an example shown in FIG. 2, a graph 210 may include 10 nodes v0 to v9 and 15 edges. However, the graph 210 shown in FIG. 2 is merely an exemplary graph for ease of description and the embodiments are not limited thereto.

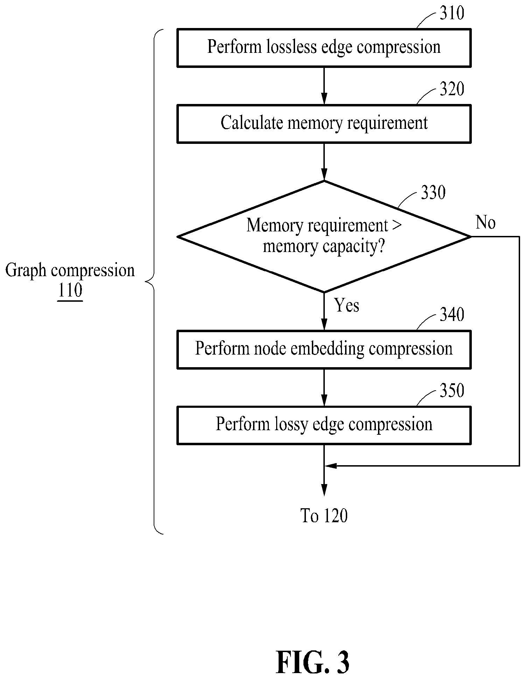

In some cases, the compressed graph (or a summary graph) may include a plurality of supernodes and a plurality of superedges (in some cases, the superedges are used to connect the supernodes). The process of graph compression will be described with reference to FIG. 3.

In the context of Graph Convolutional Networks (GCNs), a "supernode" refers to a central node or a group of nodes within a graph. In some cases, a supernode has a significant impact on the overall structure and dynamics of the graph. In some cases, a supernode may possess a high degree of connectivity with numerous other nodes in the graph. Similarly, a "superedge" as described herein denotes an edge connecting nodes (e.g., supernodes) within a graph. The superedge may represent relationships or dependencies between nodes, contributing significantly to the overall connectivity and information flow within the graph. When training GCNs, analyzing superedges requires attention due to the potential of the superedges to shape the network's behavior and learning dynamics.

In operation 120, the training device may train a GCN model based on the compressed graph.

According to an embodiment, in operation 120, the training device may perform aggregation on embedding information (e.g., an embedding matrix) of nodes belonging to each supernode of the compressed graph. For example, aggregation may include an operation of summing given objects (e.g., embedding information of nodes belonging to a supernode). For example, if the given objects are A and B, aggregation may include an operation of determining (or computing) A+B by summing A and B.

The aggregation by the training device of the embedding information of nodes belonging to a supernode in an $l$-th layer of the GCN model (e.g., embedding information output by an $(l-1)$-th layer of the GCN model) may be referred to as "supernode aggregation". The training device may determine supernode information of each supernode using supernode aggregation in the $l$-th layer of the GCN model. As used herein, the supernode information of a supernode may represent the result of aggregation of embedding information of nodes belonging to the supernode.

In some cases, the training device may determine iteratively used (or reused) supernode information (hereinafter, referred to as a "supernode term") among supernode information of a plurality of supernodes. The training device may perform aggregation based on superedges of each supernode in the $l$-th layer of the GCN model, and such aggregation may be referred to as "superedge aggregation". Accordingly, the training device may use the supernode term while performing superedge aggregation and thus, may reduce the number of operations while training the GCN model and improve the training speed.

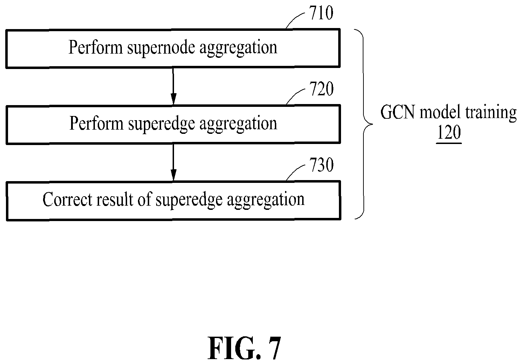

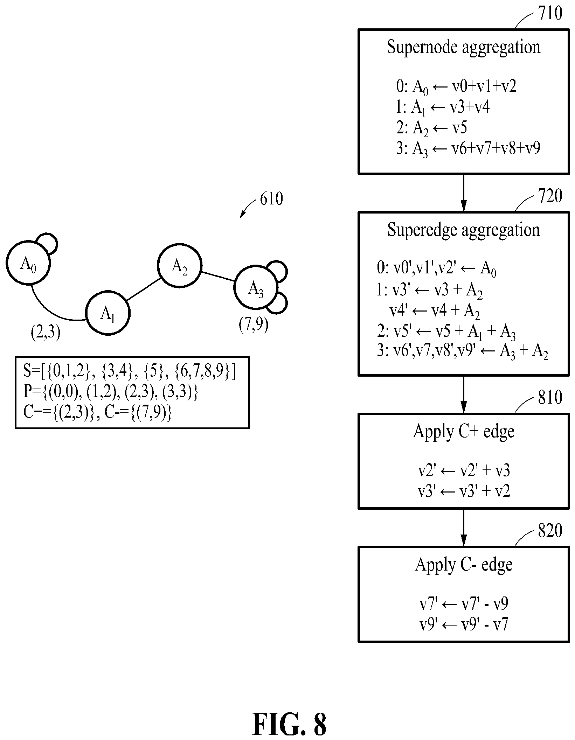

Existing compression methods for GCN models compress node embedding matrices. However, such methods fail to compress GCN edge information. In case of a GCN, edge information occupies a larger proportion than node embedding matrices. As a result, the total compression rate for the GCN may be low even if the node embedding matrices are compressed. According to an embodiment of the present disclosure, the training device may obtain a compressed graph by compressing the node embedding matrices (i.e., embedding information of nodes) and edge information of the graph 210, and train the GCN model based on the compressed graph. Accordingly, the memory requirement issue and data communication overhead that may occur when training a large-scale GCN model may be eliminated. A training method of the GCN model will be described with reference to FIGS. 7 and 8.

FIGS. 3 to 6 illustrate a graph compression method according to an embodiment. The steps in FIG. 3 correspond to performing a graph compression as described with reference to FIG. 1 (i.e., operation 110).

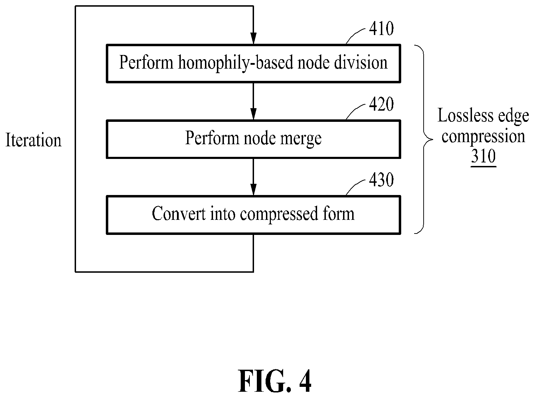

Referring to FIG. 3, in operation 310, the training device may perform lossless edge compression on the graph (or input graph) 210. As described herein, lossless edge compression may be an operation of reducing the number of edges in the graph 210. A flowchart for performing lossless edge compression is shown in FIG. 4.

Lossless edge compression may refer to a data compression technique that reduces the size of data without losing any information. Specifically, in the context of graphs or networks, lossless edge compression aims to reduce the storage space required to represent the edges of the graph while retaining all the connectivity information. In some cases, lossless edge compression may be achieved using, but not limited to, a run-length encoding (RLE), data encoding, or variable length encoding (VLE) methods. By reducing the size of the edge data while preserving connectivity information, lossless edge compression enables more efficient storage, transmission, and accurate processing of graph data.

FIG. 4 illustrates a method of performing a lossless edge compression as described in operation 310 of FIG. 3. Referring to FIG. 4, in operation 410, the training device may perform homophily-based node division on the graph 210. In some cases, the graph 210 may correspond to a dataset that has homophily. As used herein, homophily refers to the characteristic that nodes with similar tendencies connect with each other. In some cases, homophily refers to the tendency of nodes with similar attributes or characteristics to be connected or to form links with each other more frequently than with nodes that have dissimilar attributes.

Accordingly, the training device may group the nodes in the graph 210 based on the homophily of the graph 210. The training device may divide the nodes in the graph 210 into a plurality of groups to compress the graph 210, thereby reducing the time to compress the graph 210.

For example, the nodes v0 to v9 in the graph 210 may have respective (e.g., different) labels. The training device may group the nodes v0 to v9 by class based on the respective labels of the nodes v0 to v9 in the graph 210. Nodes having the same class may belong to the same group.

According to an embodiment, the size of some of the formed groups that is greater than or equal to a predetermined level are referred to as oversized groups. In some cases, the training device may divide the oversized groups based on the distance (or similarity) between embedding information (e.g., embedding matrices) corresponding to each node of the plurality of nodes in the oversized groups.

In operation 420, the training device may perform node merge on the formed groups. In some cases, the training device may determine node pairs that minimize the cost among nodes in each formed group by performing a greedy algorithm on each formed group. A greedy algorithm is used to solve optimization problems by making locally optimal choices at each step with the hope of finding a globally optimal solution. Greedy algorithms iteratively build up a solution by selecting the best available option at each stage without reconsidering previous choices. For example, a greedy algorithm may be applied to tasks such as finding a minimum spanning tree, finding a shortest path, or solving the vertex cover problem.

In some cases, the cost may be, for example, $|P| + |C^+| + |C^-|$. Here, $|P|$ may denote the number of superedges. In some cases, there may be edges that are represented (or defined) in the graph 210 but are not represented (or defined) in the compressed graph (hereinafter, referred to as "$C^+$ edges"). $|C^+|$ may denote the number of $C^+$ edges. In some cases, there may be edges that are not represented (or defined) in the graph 210 but are represented (or defined) in the compressed graph (hereinafter, referred to as "$C^-$ edges"). $|C^-|$ may denote the number of $C^-$ edges. The training device may determine node pairs that minimize the sum of the number of superedges, the number of $C^+$ edges, and the number of $C^-$ edges in each formed group.

In operation 430, the training device may convert the graph 210 into a compressed form based on the determined node pairs. For example, the training device may determine the determined node pairs to be supernodes (hereinafter, referred to as "initial supernodes"). The training device may generate a compressed graph by connecting the determined initial supernodes. In case of a first iteration (e.g., iteration=1), the compressed graph generated by connecting the initial supernodes is called "Compressed Graph1". The training device may find edges that are represented in the graph 210 but are not represented in Compressed Graph 1 (hereinafter, $C_1^+$ edges) and add the $C_1^+$ edges to Compressed Graph1. The training device may find edges that are not represented in the graph 210 but are represented in Compressed Graph1 (hereinafter, $C_1^-$ edges).

In a second iteration (e.g., iteration=2), the training device may perform operations 410 to 430. The training device may form a plurality of groups by performing homophily-based node division on Compressed Graph1, and perform node merge on the formed groups. Each of the formed groups may include initial supernodes. The training device may determine supernode pairs that minimize the cost between the initial supernodes in each formed group. The training device may convert Compressed Graph1 into a compressed form based on the determined supernode pairs. The training device may iterate operations 410 to 430 to group the nodes in graph 210.

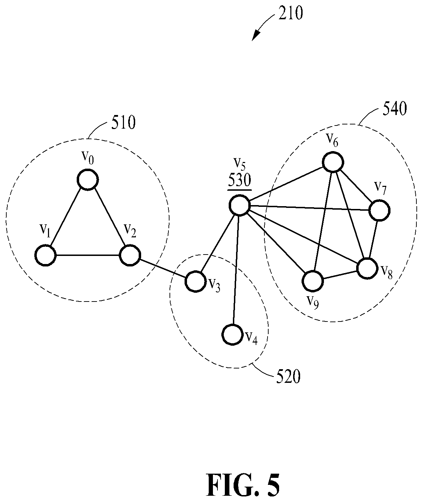

FIG. 5 shows grouping of nodes v0 to v9 in the graph 210 using the iterative process. Based on iterations of operations 410 to 430 to determine the supernode pairs for cost minimization, the nodes v0 to v2 may form a first group 510, the nodes v3 and v4 may form a second group 520, the node v5 may be a third group 530, and the nodes v6 to v9 may form a fourth group 540. The groups 510 to 540 may correspond to supernodes and the training device may determine (or generate) a compressed graph based on the groups 510 to 540. In some cases, the training device may simultaneously represent (or add) edges that are represented in the graph 210 but are not represented in the compressed graph (e.g., $C^+$ edges) in (or to) the compressed graph. Additionally, the training device may find edges that are not represented in the graph 210 but are represented in the compressed graph (e.g., $C^-$ edges).

Referring again to FIG. 3, in operation 320, the training device may determine (or estimate) the memory requirement based on the configuration of the GCN model and hardware (e.g., memory). For example, the training device may determine the memory requirement using Equation 1.

[Equation 1]

$$\mathrm{bit}_{\mathrm{in}}|V|d^0 + \mathrm{bit}_{\mathrm{inter}}|V|\sum d^l + \mathrm{bit}_{\mathrm{edge}}(|P| + |C^+| + |C^-|)$$

As used herein, $d^0$ may denote the dimension of output information (e.g., an output embedding matrix) of an input layer of the GCN model, and $d^l$ may denote the dimension of output information (e.g., an output embedding matrix) of the l-th layer of the GCN model. Additionally, $\mathrm{bit}_{\mathrm{in}}$ may denote the bit precision (e.g., 32 bits, etc.) of input embedding information (e.g., embedding matrices of the nodes v0 to v9 in the graph 210) provided to the input layer. $\mathrm{bit}_{\mathrm{inter}}$ may denote the bit precision (e.g., 32 bits, etc.) of intermediate embedding information (e.g., intermediate embedding matrices) corresponding to operation results from intermediate layers (e.g., the input layer to the (1-1)-th layer) of the GCN model. $\mathrm{bit}_{\mathrm{edge}}$ may denote the bit precision of a superedge.

In Equation 1, $|V|$ may denote the number of nodes in the graph 210, and $|P|$ may denote the number of superedges in the compressed graph. $|C^+|$ may denote the number of $C^+$ edges, and $|C^-|$ may denote the number of $C^-$ edges.

In operation 330, the training device may determine whether the memory requirement is greater than the memory capacity. The training device may determine whether the memory capacity of a given environment is sufficient for the memory requirement for training (e.g., the memory requirement calculated using Equation 1).

In case the memory requirement is greater than the memory capacity, the training device may perform node embedding compression in operation 340. Node embedding compression may be compressing embedding information (e.g., an embedding matrix) of each node in the graph 210. In some cases, the node embedding compression refers to techniques used to reduce the dimensionality or storage requirements of node embeddings while preserving their information content. For example, a node embedding compression may be performed using various techniques including, but not limited to, quantization, dimensionality reduction, clustering-based compression, sparse representation, etc.

According to an embodiment, the training device may reduce $\mathrm{bit}_{\mathrm{in}}$ to a level at which the memory requirement matches the memory capacity. The training device may reduce $\mathrm{bit}_{\mathrm{in}}$ such that $\mathrm{bit}_{\mathrm{in}}$ maintains the form of $2^k$. For example, in a case where $\mathrm{bit}_{\mathrm{in}}$ is 32 bits, the training device may reduce $\mathrm{bit}_{\mathrm{in}}$ from 32 bits to 16 bits in operation 340. Additionally, the training device may ensure that $\mathrm{bit}_{\mathrm{in}} \geq \mathrm{bit}_{\mathrm{inter}}$ is satisfied since errors in the input embedding information may have a greater effect on the accuracy of the GCN model than errors in the intermediate embedding information. For example, the training device may reduce $\mathrm{bit}_{\mathrm{in}}$ from 32 bits to 16 bits in operation 340 if $\mathrm{bit}_{\mathrm{in}}$ and $\mathrm{bit}_{\mathrm{inter}}$ in operation 320 are 32 bits each. The training device may reduce $\mathrm{bit}_{\mathrm{inter}}$ from 32 bits to 16 bits such that $\mathrm{bit}_{\mathrm{in}} \geq \mathrm{bit}_{\mathrm{inter}}$ is satisfied.

In operation 350, the training device may perform lossy edge compression. In some cases, lossy edge compression is a data compression method that reduces the size of graph edge data by sacrificing some information, typically non-critical or redundant details, to achieve higher compression ratios. Lossy compression intentionally discards certain data during the compression process. The compression method involves transforming the edge data in a way that preserves essential features and structures while minimizing the storage requirements. Lossy edge compression may be used when some loss of fidelity is acceptable, such as in large-scale graph storage, transmission, or processing, where reducing data size is prioritized over maintaining absolute accuracy.

Details regarding operation 350 are further described with reference to FIG. 4. That is, the training device may perform operations 410 to 430 as described with reference to FIG. 4 in operation 350. That is, the training device may perform lossy edge compression by removing one or more $C^+$ edges from the compressed graph at this time.

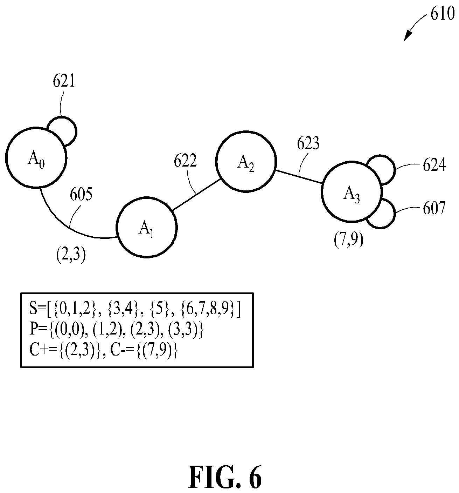

FIG. 6 shows an example of the compressed graph generated using graph compression in operation 110. In the example shown in FIG. 6, a compressed graph 610 may include supernodes A0 to A3, superedges 621 to 624, a $C^+$ edge 605, and a $C^-$ edge 607. In the example shown in FIG. 6, the supernode A0 may include the nodes v0, v1, and v2 of the graph 210, and the supernode A1 may include the nodes v3 and v4 of the graph 210. The supernode A2 may include the node v5 of the graph 210, and the supernode A3 may include the nodes v6, v7, v8, and v9 of the graph 210.

As an example shown in FIG. 6, the supernode A0 may have a self-edge (or self-loop) 621, and the supernode A3 may have a self-edge (or self-loop) 624. In some cases, a self-edge or self-loop refers to a connection originating from a node and terminating back at the same node. A self-edge represents a relationship or interaction of a node with itself, indicating self-referential characteristics or properties.

According to an embodiment, the training device may divide the graph 210. For example, the training device may use two or more physically independent memories. In this case, the training device may place nodes of the same class in the same memory, thereby minimizing data communication between the nodes of the same class.

FIGS. 7 and 8 illustrate a compressed graph-based aggregation method according to an embodiment.

Referring to FIG. 7, GCN model training may include supernode aggregation, superedge aggregation, and correcting the result of superedge aggregation. For example, the GCN model training refers to the model training as described with reference to operation 120 in FIG. 1.

In operation 710, the training device may perform supernode aggregation in layers (e.g., convolutional layers) of a GCN model. For example, as described in detail with reference to FIG. 8, the training device may perform supernode aggregation based on embedding information of nodes belonging to a supernode in an $l$-th layer of the GCN model. In some examples, the supernode aggregation may be performed based on embedding matrices of nodes output by an $(l-1)$-th layer of the GCN model. The training device may determine supernode information for the supernode in the $l$-th layer through supernode aggregation. In some examples, the training device may determine the sum of the embedding matrices of the nodes output by the $(l-1)$-th layer.

In operation 720, the training device may perform superedge aggregation in the layers of the GCN model. For example, as described in detail with reference to FIG. 8, the training device may perform superedge aggregation based on one or more superedges of a supernode and supernode information. By performing a superedge aggregation based on one or more superedges of a supernode and supernode information, embedding information of nodes (e.g., embedding matrices of the nodes output by the $(l-1)$-th layer) may be updated in the $l$-th layer.

In operation 730, the training device may correct the result of superedge aggregation based on a $C^+$ edge and/or a $C^-$ edge. For example, the training device may add embedding information of a node (e.g., another one of the nodes) forming the $C^+$ edge (e.g., embedding information output by the $(l-1)$-th layer) to updated embedding information of one of the nodes forming the $C^+$ edge. The training device may subtract embedding information of another one of the nodes forming the $C^-$ edge (e.g., embedding information output by the $(l-1)$-th layer) from updated embedding information of one of the nodes forming the $C^-$ edge. Further details regarding performing a correcting of the result of superedge aggregation will be described with reference to FIG. 8.

Equation 2 below shows embedding information of a node $v$ determined through operations 710 to 730 in the $l$-th layer.

[Equation 2]

$$x_v^l = \sum_{u \in \{N(v),v\}} x_u^{l-1}$$

$$= \begin{cases} \sum_{u \in S(v)} x_u^{l-1} + \sum_{i \in N(S(v))} \sum_{u \in S_i} x_u^{l-1} + \sum_{u \in C^+(v)} x_u^{l-1} - \sum_{u \in C^-(v)} x_u^{l-1} & \text{with self-loop} \\ x_v^{l-1} + \sum_{i \in N(S(v))} \sum_{u \in S_i} x_u^{l-1} + \sum_{u \in C^+(v)} x_u^{l-1} - \sum_{u \in C^-(v)} x_u^{l-1} & \text{without self-loop} \end{cases}$$

As used herein, S(v) may denote the supernode to which the node $v$ belongs, $C^+(v)$ may denote the $C^+$ edge of the node $v$, $C^-(v)$ may denote the $C^-$ edge of the node $v$, and A(v) may denote the list of neighbors of the node $v$.

Further details and examples corresponding to operations 710 to 730 will be described with reference to FIG. 8.

FIG. 8 depicts a compressed graph (e.g., compressed graph 610) generated using graph compression (e.g., a graph compression operation corresponding to operation 110). As an shown in FIG. 8, the supernode A0 may include nodes v0, v1, and v2, the supernode A1 may include nodes v3 and v4, the supernode A2 may include node v5, and the supernode A3 may include nodes v6, v7, v8, and v9.

In operation 710 of FIG. 8, the training device may determine supernode information of the supernode A0 in the $l$-th layer of the GCN model by summing the embedding information of the nodes v0, v1, and v2 output by the $(l-1)$-th layer of the GCN model (i.e., A0 ← v0+v1+v2 shown in operation 710 of FIG. 8). Similarly, the training device may determine supernode information of the supernode A1 in the *l*-th layer of the GCN model by summing the embedding information of the nodes v3 and v4 output by the (*l*-1)-th layer of the GCN model (A1 <- v3+v4 shown in operation 710 of FIG. 8). The training device may determine the embedding information of the node v5 output by the (*l*-1)-th layer of the GCN model to be supernode information of the supernode A2 in the *l*-th layer of the GCN model (A2 ← v5 shown in operation 710 of FIG. 8). The training device may determine supernode information of the supernode A3 in the *l*-th layer of the GCN model by summing the embedding information of the nodes v6, v7, v8, and v9 output by the (*l*-1)-th layer of the GCN model (A3 <- v6+v7+v8+v9 shown in operation 710 of FIG. 8).

Operation 720 may include performing a superedge aggregation process. As shown in operation 720 of FIG. 8, among the supernode information of the supernodes A0, A1, A2, and A3, the supernode information of the supernodes A2 and A3 may be iteratively used during an operation process (e.g., a superedge aggregation process). The training device may determine the supernode information of the supernodes A2 and A3 to be supernode terms. The training device may not iteratively calculate the supernode information of the supernodes A2 and A3 corresponding to the supernode terms once (or after) the supernode information of the supernodes A2 and A3 corresponding to the supernode terms is determined. Accordingly, the number of operations may be reduced corresponding to the number of iterations of use (or the number of reuses) of the supernode terms, and the training speed of the GCN model may be increased.

In operation 720 of FIG. 8, since the supernode A0 forms a self-loop (or self-edge), the training device may update (or determine) the embedding information of the nodes v0, v1, and v2 to the supernode information of the supernode A0 determined in the *l*-th layer of the GCN model (v0', v1', v2'← A0 of FIG. 8).

Since the supernode A1 is connected to the supernode A2 with a superedge, the training device may determine the sum of the embedding information of the node v3 output by the (*l*-1)-th layer and the supernode information of the supernode A2 to be the embedding information of the node v3 in the *l*-th layer. Thus, the training device may update the embedding information of the node v3 as the sum of the embedding information of the node v3 output by the (*l*-1)-th layer and the supernode information of the supernode A2 (v3' ← v3+A2 in FIG. 8). Similarly, the training device may update the embedding information of the node v4 to the sum of the embedding information of the node v4 output by the (*l*-1)-th layer and the supernode information of the supernode A2 (v4' <- v4+A2 in FIG. 8).

Since the supernode A2 is connected to each of the supernode A1 and supernode A3 with a superedge, the training device may determine the sum of the embedding information of the node v5 output by the (*l*-1)-th layer, the supernode information of the supernode A1, and the supernode information of the supernode A3 as the embedding information of the node v5 in the *l*-th layer. Thus, the training device may update the embedding information of the node v5 as the sum of the embedding information of the node v5 output by the (*l*-1)-th layer, the supernode information of the supernode A1, and the supernode information of the supernode A3 (v5' <- v5+A1+A3 of FIG. 8).

Since the supernode A3 forms a self-loop and is connected to the supernode A2 with a superedge, the training device may update embedding information of the nodes v6, v7, v8, and v9 as the sum of the supernode information of the supernodes A2 and A3 determined in the *l*-th layer of the GCN model (v6', v7', v8', v9' ← A3+A2 of FIG. 8).

In operation 810, the training device may apply a $C^+$ edge to the result of superedge aggregation. As an example shown in FIG. 8, the $C^+$ edge may indicate the connection between the node v2 and the node v3 (as also shown in graph 210 of FIG. 2). The training device may add the embedding information of the node v3 output by the (1-1)-th layer to the updated embedding information of the node v2 (v2'<- v2' + v3 in operation 810 of FIG. 8). The training device may add the embedding information of the node v2 output by the (*l*-1)-th layer to the updated embedding information of the node v3 (v3'← v3' + v2 in operation 810 of FIG. 8).

In operation 820, the training device may apply a $C^-$ edge to the result of superedge aggregation. As an example shown in FIG. 8, the $C^-$ edge may indicate that the node v7 and the node v9 are not connected in the graph 210 (as indicated in graph 210 of FIG. 2). The training device may subtract the embedding information of the node v9 output by the (*l*-1)-th layer from the updated embedding information of the node v7 (v7'<- v7' - v9 in operation 820 of FIG. 8). The training device may subtract the embedding information of the node v7 output by the (1-1)-th layer from the updated embedding information of the node v9 (v9'← v9' - v7 in operation 820 of FIG. 8).

Operations 810 and 820 in FIG. 8 may be included in or correspond to operation 730 of FIG. 7. The training device may train the GCN model by iteratively performing operations 710, 720, and 730 for each of the plurality of layers of the GCN model.

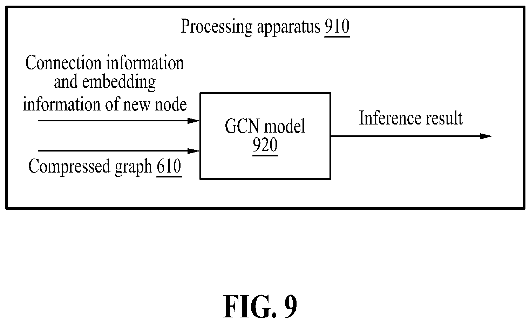

FIGS. 9 to 11 illustrate an example of performing inference using a GCN model by a processing apparatus.

According to an embodiment, a processing apparatus 910 may correspond to a deep learning accelerator. For example, the processing apparatus 910 may be a graphical processing unit (GPU) or a neural processing unit (NPU), but is not limited thereto.

Referring to FIG. 9, according to an embodiment, the processing apparatus 910 may input connection information of a new node to be added to a large-scale graph (e.g., the graph 210 in FIG. 2), embedding information (e.g., an embedding matrix) of the new node, and the compressed graph 610 into a GCN model 920. In some cases, the input connection information may refer to connection information regarding the node of the graph to which the new node is to be connected. The compressed graph 610 may include, for example, the supernode information of the supernodes A0, A1, A2, and A3, the superedges, the C$^+$ edge, and the C$^-$ edge. In some examples, the C$^+$ edge and/or the C$^-$ edge may not be included in the compressed graph 610 based on a shape of the compressed graph 610 (as described in FIGs. 6 and 8). The GCN model 920 may be a GCN model trained according to the GCN model training method described with reference to FIGS. 1 to 8.

The processing apparatus 910 may obtain an inference result from the GCN model 920. For example, an inference result may include, but is not limited to, an embedding information according to the connection of the new node to the graph 210 (or the compressed graph 610).

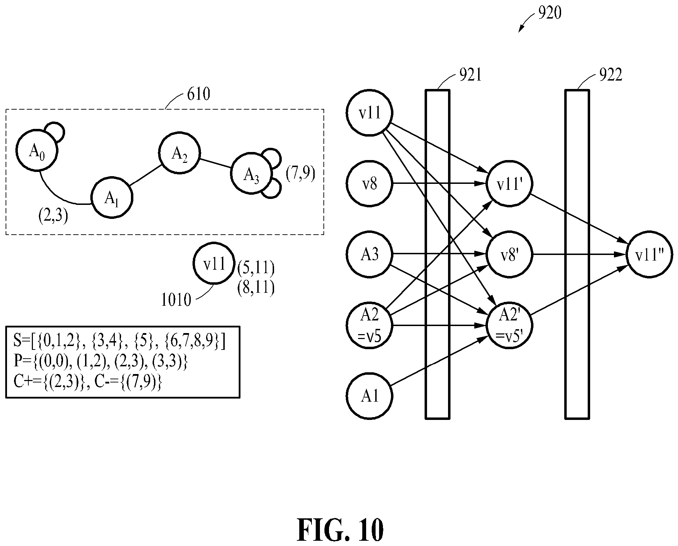

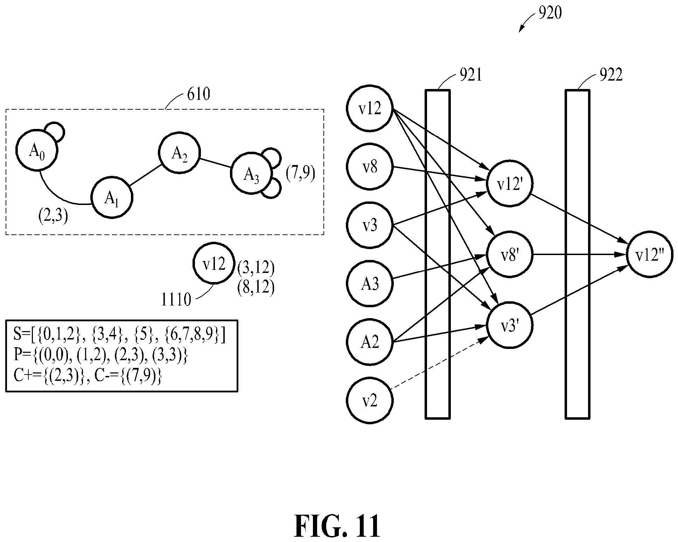

Hereinafter, the operation of the processing apparatus 910 will be described with reference to FIGS. 10 and 11.

FIG. 10 shows a new node v11 1010, compressed graph 610, and GCN model 920. The GCN model 920 may include a plurality of layers. For ease of description, it is assumed that the GCN model 920 includes two layers 921 and 922 in FIG. 10, however embodiments are not limited thereto. The processing apparatus 910 may perform supernode aggregation and/or superedge aggregation (as described with reference to FIGs. 3-8) through each of the layers 921 and 922.

The node v11 1010 may include connection information indicating that the node v11 1010 is to be connected to each of the nodes v5 and v8 in the graph 210 (as described with reference to FIG. 2). Each of the nodes v5 and node v8 may be referred to as a target node of the node v11 1010.

The processing apparatus (e.g., processing apparatus 910 described with reference to FIG. 9) may determine the embedding information of the nodes v5 and v8 as input data of the GCN model 920.

The processing apparatus 910 may determine the input data of the GCN model 920 based on a superedge of a supernode to which a node to be connected to the node v11 1010 belongs and the connection information of the node v11 1010. For example, the processing apparatus 910 may identify the supernode A2 to which the node v5 to be connected to the node v11 1010 belongs, and determine supernode information of the supernodes A1 and A3 that form superedges with the identified supernode A2 as input data of the GCN model 920. The processing apparatus 910 may identify the supernode A3 to which the node v8 to be connected to the node v11 1010 belongs.

Additionally, the processing apparatus 910 may determine the supernode information of the supernode A3 as the input data since the identified supernode A3 forms a self-loop (or self-edge). In some cases, the processing apparatus 910 may determine the supernode information of the supernode A2 as the input data of the GCN model 920 since the identified supernode A3 forms a superedge with the supernode A2. The processing apparatus 910 may determine the embedding information of the nodes v5 and v8 to which the node v11 1010 is to be connected to be the input data of the GCN model 920.

Accordingly, as shown in the example of FIG. 10, the embedding information of the node v11 1010, the embedding information of the node v8, the supernode information of the supernode A3, the supernode information of the supernode A2, and the embedding information of the supernode A1 may be input into the first layer 921. Since the supernode A2 includes only the node v5, the embedding information of the node v5 may be the same as the supernode information of the supernode A2. Although not shown in FIG. 10, a C$^+$ edge and a C$^-$ edge may be input into the first layer 921.

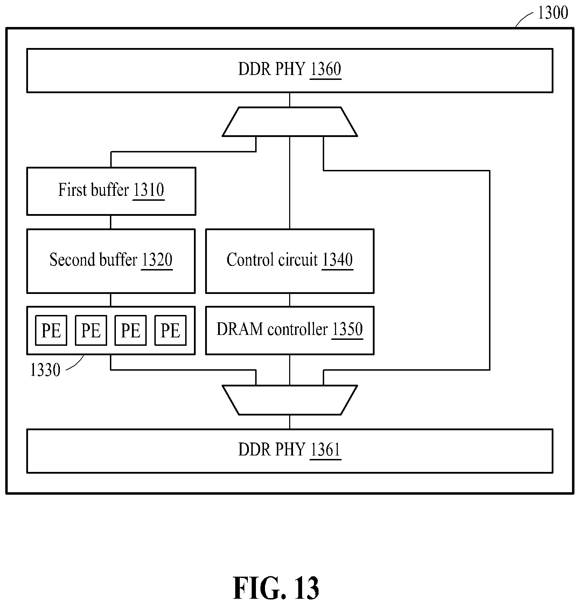

The processing apparatus 910 may identify (or predict) that the supernode information of the supernodes A2 and A3 is iteratively used (or reused) in the operations of the GCN model 920 in a case where the node v11 1010 is added to the graph 210. The processing apparatus 910 may store the supernode information of the supernodes A2 and A3 in a buffer (e.g., a first buffer which will be described later with reference to FIG. 13). The processing apparatus 910 may receive the supernode information of the supernodes A2 and A3 from the buffer when the supernode information of the supernodes A2 and A3 is used as operands. Accordingly, the processing apparatus 910 may reduce access to a dynamic random-access memory (DRAM) and increase the operation speed.

Examples of a memory device include random access memory (RAM), read-only memory (ROM), or a hard disk. Examples of memory devices include solid state memory and a hard disk drive. In some examples, memory is used to store computer-readable, computer-executable software including instructions that, when executed, cause a processor to perform various functions described herein. In some cases, the memory contains, among other things, a basic input/output system (BIOS) which controls basic hardware or software operation such as the interaction with peripheral components or devices. In some cases, a memory controller operates memory cells. For example, the memory controller can include a row decoder, column decoder, or both. In some cases, memory cells within a memory store information in the form of a logical state.

A dynamic random-access memory (DRAM) is a type of semiconductor memory that stores data in a cell consisting of a capacitor and a transistor. DRAM offers high-density storage and fast access times, making it widely used in computer systems, mobile devices, and other electronic devices. Its key advantage lies in its ability to store data dynamically, requiring periodic refreshing to maintain the stored information. DRAM technology continues to evolve, with advancements focusing on increasing storage density, reducing power consumption, and enhancing memory access speeds, making it a valuable subject for patent protection in the field of semiconductor memory technologies.

The processing apparatus 910 may update (or determine) the embedding information of the node v11 1010 and the embedding information of the nodes v5 and v8 to be connected to the node v11 1010 through the first layer 921. For example, the processing apparatus 910 may update the embedding information of the node v11 1010 by summing the

**EP 4 557 167 A1**

embedding information of the node v11 1010, the embedding information of the node v8, and the embedding information of the node v5 (= the supernode information of the supernode A2). In other words, v11' ← v11+v8+A2.

The node v8 should form a connection with the node v11 1010, and the supernode A3 to which the node v8 belongs has a self-edge, and the supernode A3 is connected to the supernode A2 (= the node v5). Based on the connection relationship, the processing apparatus 910 may update the embedding information of the node v8 by summing the embedding information of the node v11 1010, the supernode information of the supernode A3, and the embedding information of the node v5 (= the supernode information of the supernode A2). In other words, v8'← v11+A3+A2.

The node v5 should form a connection with the node v11 1010, and the supernode A2 to which the node v5 belongs is connected to each of the supernodes A1 and A3. Based on the connection relationship, the processing apparatus 910 may update the embedding information of the node v5 by summing the embedding information of the node v11 1010, the supernode information of the supernode A3, the embedding information of the node v5 (= the supernode information of the supernode A2), and the supernode information of the supernode A1. In other words, A2'← v11+A3+A2+A1.

The first layer 921 may output the updated embedding information (hereinafter, referred to as "intermediate embedding information") of the nodes v5, v8, and v11.

The processing apparatus 910 may update intermediate embedding information of the node v11 by summing the intermediate embedding information of the nodes v5, v8, and v11. Thus, v11"← v11'+v8'+A2'. The second layer 922 may output the updated intermediate embedding information of the node v11. The processing apparatus 910 may obtain the intermediate embedding information output by the second layer 922 as an inference result.

FIG. 11 shows a new node v12 1110, the compressed graph 610, and the GCN model 920.

The node v12 1110 may have connection information indicating that the node v12 1110 is to be connected to each of the nodes v3 and v8 in the graph 210 (e.g., graph 210 as described with reference to FIG. 2).

The processing apparatus (such as processing apparatus 910 as described with reference to FIG. 9) may determine input data of the GCN model 920 based on a superedge of a supernode to which a node which is to be connected to the node v12 1110 belongs and the connection information of the node v12 1110. For example, the processing apparatus 910 may identify the supernode A1 to which the node v3 to be connected to the node v12 1110 belongs, and determine supernode information of the supernode A2 that forms a superedge with the identified supernode A1 to be the input data of the GCN model 920.

Additionally, the processing apparatus may identify the supernode A3 to which the node v8 to be connected to the node v12 1110 belongs. Since the identified supernode A3 forms a self-loop (or self-edge), the processing apparatus 910 may determine the supernode information of the supernode A3 to be the input data. Since the identified supernode A3 forms a superedge with the supernode A2, the processing apparatus 910 may determine the supernode information of the supernode A2 to be the input data of the GCN model 920. The processing apparatus 910 may determine the embedding information of the nodes v3 and v8 to which the node v12 1110 is to be connected to be the input data of the GCN model 920. Since the node v2 may form a C$^+$ edge with the node v3 to be connected to the node v12 1110, the processing apparatus 910 may determine the embedding information of the node v2 to be the input data of the GCN model 920.

As an example shown in FIG. 11, the embedding information of the node v12 1110, the embedding information of the node v3, the embedding information of the node v8, the supernode information of the supernode A2, the supernode information of the supernode A3, and the embedding information of the node v2 may be input into the first layer 921.

The processing apparatus 910 may identify (or predict) that the supernode information of the supernode A2 is iteratively used (or reused) in the operations of the GCN model 920 when the node v12 1110 is added to the graph 210. The processing apparatus 910 may store the supernode information of the supernode A2 in the buffer (e.g., the first buffer which will be described later with reference to FIG. 13). The processing apparatus 910 may receive the supernode information of the supernode A2 from the buffer when the supernode information of the supernode A2 is used as an operand. Accordingly, the processing apparatus 910 may reduce access to a DRAM and increase the operation speed.

The processing apparatus 910 may update (or determine) the embedding information of the node v12 1110 and the embedding information of the nodes v3 and v8 to be connected to the node v12 1110 through the first layer 921. For example, the processing apparatus 910 may update the embedding information of the node v12 1110 by summing the embedding information of the node v12 1110, the embedding information of the node v8, and the embedding information of the node v3. In other words, v12' ← v12+v8+v3. The node v8 should form a connection with the node v12 1110, and the supernode A3 to which the node v8 belongs includes a self-edge, and the supernode A3 is connected to the supernode A2. Based on the connection, the processing apparatus 910 may update the embedding information of the node v8 by summing the embedding information of the node v12 1110, the supernode information of the supernode A3 with a self-edge, and the supernode information of the supernode A2. In other words, v8'<- v12+A2+A3. The node v3 should form a connection with the node v12 1110, and the supernode A1 to which the node v3 belongs is connected to the supernode A2. Based on the connection, the processing apparatus 910 may update the embedding information of the node v3 by summing the embedding information of the node v12 1110, the embedding information of the node v3, and the supernode information of the supernode A2. In other words, v3'<- v3+v12+A2.

12

The first layer 921 may output the updated embedding information (hereinafter, referred to as "intermediate embedding information") of the nodes v12, v8, and v3.

Since the node v3 corresponds to the node with the $C^+$ edge, the processing apparatus 910 may correct intermediate embedding information of the node v3 based on the $C^+$ edge. For example, the processing apparatus 910 may add the embedding information of the node v2 to the intermediate embedding information of the node v3. In other words, v3' ← v3'+v2 (i.e., v3'← v3+v12+A2+v2).

The processing apparatus 910 may update intermediate embedding information of the node v12 by summing the intermediate embedding information of the nodes v12, v8, and v3. In other words, v12"← v12'+v8'+v3'. The second layer 922 may output the updated intermediate embedding information of the node v12. The processing apparatus 910 may obtain the intermediate embedding information output by the second layer 922 as an inference result using the GCN model 920.

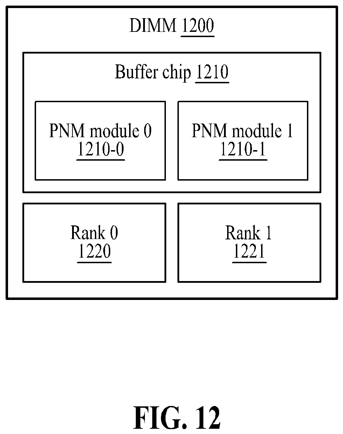

FIG. 12 is a block diagram illustrating a dual in-line memory module (DIMM) according to an embodiment.

A DIMM is a standardized, modular component used in computer systems to provide additional random access memory (RAM) capacity. A DIMM typically consists of a small printed circuit board with multiple memory chips, connectors, and electrical traces. A DIMM plugs into specialized memory slots on the motherboard of a computer or server and provides for the expansion of memory capacity beyond what is integrated into the motherboard. DIMMs come in various form factors and speeds to accommodate different types of computer systems and memory requirements and play a crucial role in enhancing system performance and scalability.

Accordingly, an embodiment describes a DIMM 1200. As shown in FIG. 12, DIMM 1200 may include a buffer chip 1210 and a plurality of ranks 1220 and 1221. Each of the plurality of ranks 1220 and 1221 may include one or more DRAMs.

The buffer chip 1210 may include processing-near-memory (PNM) modules 1210-0 and 1210-1. The processing apparatus 910 described above may be included in at least one of the PNM modules 1210-0 and 1210-1.

A PNM refers to a computing architecture where processing units are integrated directly within or in close proximity to memory modules. The arrangement provides for computational tasks to be performed closer to data storage, minimizing data movement, and alleviating bandwidth constraints. PNM architectures can significantly enhance performance and energy efficiency for memory-bound tasks, such as data-intensive analytics, machine learning inference, and graph processing. By reducing the distance between processing and memory, PNM architectures offer the potential for substantial speedups and improvements in overall system efficiency.

Referring to FIG. 12, the PNM module 0 1210-0 may correspond to a rank 0 1220, and the PNM module 1 1210-1 may correspond to a rank 1 1221. For example, a rank may refer to a grouping or subdivision of memory within a memory module. A rank represents a set of modules that can be accessed independently but share some common signals and resources. In some cases, ranks enable organization and management of memory accesses efficiently. By dividing memory into ranks, PNM architectures can exploit parallelism and reduce contention, providing for multiple memory operations to occur simultaneously which improves overall system throughput and can enhance the performance of memory-bound tasks.

The PNM module 0 1210-0 may store supernode information and superedge information of a portion of the supernodes of the compressed graph 610. The PNM module 1 1210-1 may store supernode information and superedge information of the remaining supernodes of the compressed graph 610. For example, the PNM module 0 1210-0 may store supernode information and superedge information of the supernodes A0 and A1 in the compressed graph 610. According to an exemplary embodiment, the PNM module 0 1210-0 may store information on the $C^+$ edge 605. The PNM module 1 1210-1 may store supernode information and superedge information of the supernodes A2 and A3 in the compressed graph 610. According to an embodiment, the PNM module 1 1210-1 may store information on the $C^-$ edge 607.

The rank 0 1220 may store embedding information and connection information of a portion of the nodes of the graph 210, and the rank 1 1221 may store embedding information and connection information of the remaining nodes of the graph 210. For example, the rank 0 1220 may store embedding information and connection information of the nodes v0, v1, v2, v3, and v4 of the graph 210, and the rank 1 1221 may store embedding information and connection information of the nodes v5, v6, v7, v8, and v9 of the graph 210.

Each of the PNM module 0 1210-0 and the PNM module 1 1210-1 may perform the operation of the processing apparatus 910 as described with reference to FIGs. 9-11.

FIG. 13 illustrates a processing-near-memory (PNM) module according to an embodiment. Referring to FIG. 13, a plurality of components that may be included in a PNM module 1300 is shown.

In some examples, each of the PNM module 0 1210-0 and the PNM module 1 1210-1 described with reference to FIG. 12 may correspond to the PNM module 1300. In some cases, the processing apparatus 910 described with reference to FIGs. 9-11 may correspond to the PNM module 1300. The processing apparatus 910 may include at least a portion or all of the components of the PNM module 1300.

The PNM module 1300 may include a first buffer 1310, a second buffer 1320, an operation circuit 1330, a control circuit (or control logic) 1340, a DRAM controller 1350, and double data rate (DDR) physical (PHY) interfaces 1360 and 1361.

Considering a situation when a new node (e.g., a node v12) is added to the graph 210, the PNM module 1300 may receive data required to perform an inference operation for the new node (e.g., the node v12) from a DRAM of the rank (e.g., a rank 1 1221) corresponding to the PNM module 1300 via the DDR PHY interface 1360. The received data may include, for example, embedding information/connection information of the new node (e.g., the node v12), supernode information/superedge information of the supernodes A2 and A3, $C^-$ edge information, embedding information/connection information of a node v3 to be connected to the node v12, and embedding information/connection information of a node v8 to be connected to the node v12, as described with reference to FIG. 11.

The supernode information of the supernode A2 may correspond to a supernode term such that the PNM module 1300 may store the supernode information of the supernode A2 in the first buffer 1310. When the supernode term (e.g., the supernode information of the supernode A2) is used as an operand for an operation (e.g., by the operation circuit 1330), the operation circuit 1330 may receive the supernode term from the first buffer 1310. As a result, the number of DRAM accesses of the PNM module 1300 may be further reduced, which may increase the operation speed (or inference speed).

The PNM module 1300 may store the embedding information/connection information of the new node (e.g., the node v12), the supernode information of the supernode A3, the superedge information of the supernodes A2 and A3, the $C^-$ edge information, the embedding information/connection information of the node v3 to be connected to the node v12, and the embedding information/connection information of the node v8 to be connected to the node v12 in the second buffer 1320.

The operation circuit 1330 may include a plurality of processing elements (PEs), each of which may include one or more multiply and accumulation (MAC) operation circuits. The operation circuit 1330 may perform the computational operation of the processing apparatus 910 described with reference to FIG. 11. The operation circuit 1330 may perform operations of the GCN model 920 described with reference to FIGs. 10-11.

For example, the operation circuit 1330 may receive the embedding information of the nodes v3, v8, and v12 from the second buffer 1320 and update the embedding information of the node v12 1110 according to v12' <- v12+v8+v3 as described with reference to FIG. 11. The operation circuit 1330 may store the updated embedding information of the node v12 1110 in the second buffer 1320.

The operation circuit 1330 may receive the supernode information of the supernode A2 from the first buffer 1310 and receive the embedding information of the node v12 and the supernode information of the supernode A3 from the second buffer 1320. The operation circuit 1330 may update the embedding information of the node v8 according to v8' <- v12+A2+A3 as described with reference to FIG. 11. The operation circuit 1330 may store the updated embedding information of the node v8 in the second buffer 1320.

The operation circuit 1330 may receive the supernode information of the supernode A2 from the first buffer 1310 and receive the embedding information of the nodes v3 and v12 from the second buffer 1320. The operation circuit 1330 may update the embedding information of the node v3 according to v3' <- v3+v12+A2 as described in FIG. 11. Since the $C^+$ edge is present, the operation circuit 1330 may correct the updated embedding information of the node v3 by adding the embedding information of the node v2 to the updated embedding information of the node v3 according to v3' <- v3'+v2 described in FIG. 11. The operation circuit 1330 may store the corrected embedding information of the node v3 in the second buffer 1320.

The operation circuit 1330 may compute a sum of (e.g., add) the updated embedding information of the nodes v12, v8, and v3 according to v12" <- v12'+v8'+ v3' as described in FIG. 11. Accordingly, the operation circuit 1330 may obtain the final embedding information of the node v12 as an inference result.

The DRAM controller 1350 may provide for the PNM module 1300 to receive data from a DRAM and provide for the PNM module 1300 to write data to a DRAM. For example, the DRAM controller 1350 may write the inference result (e.g., the final embedding information of the node v12) to a DRAM (e.g., a DRAM at a rank 1 1221) through the DDR PHY interface 1361.

According to an embodiment, the control circuit 1340 may provide for the PNM module 1300 to distinguish between edge information, superedge information, and corrected edge information ($C^+$ edge information/$C^-$ edge information). For example, the edge information, the superedge information, and the corrected edge information may each have the same format (e.g., a format of (integer, integer)). The control circuit 1340 may provide for the PNM module 1300 (e.g., the operation circuit 1330) to distinguish between the edge information, the superedge information, and the corrected edge information during the operation process.

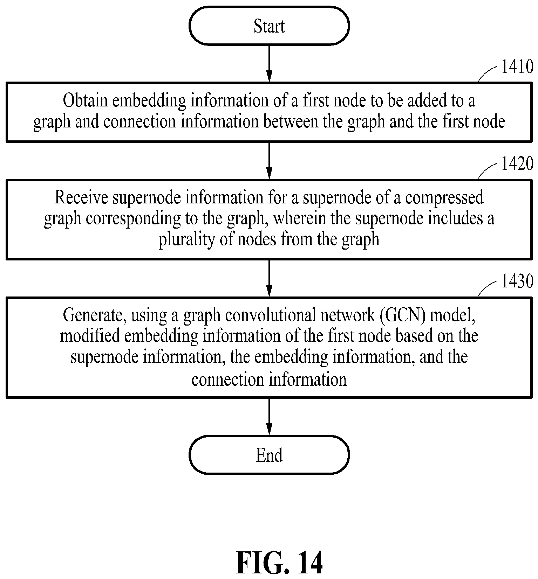

FIG. 14 is a flowchart illustrating an operating method of a processing apparatus according to an embodiment.

Referring to FIG. 14, in operation 1410, the processing apparatus 910 may obtain initial embedding information of a first node (e.g., the node v11 of FIG. 10 or the node v12 of FIG. 11) to be added to the graph 210 and connection information between the graph 210 and the first node. The initial embedding information of the first node may be embedding information of the first node received by the processing apparatus 910 from a DRAM (e.g., embedding information in a state where the first node is not connected to the graph 210).

In operation 1420, the processing apparatus 910 may receive supernode information for a supernode of a compressed graph corresponding to the graph, wherein the supernode includes a plurality of nodes from the graph. For example, the processing apparatus may receive, from a buffer (e.g., the first buffer 1310), supernode information iteratively used for an operation among pieces of supernode information of a plurality of supernodes of the compressed graph 610.

In operation 1430, the processing apparatus may generate, using a graph convolutional network (GCN) model, modified embedding information of the first node based on the supernode information, the embedding information, and the connection information. In some examples, the processing apparatus 910 may determine embedding information of the first node based on the received supernode information, the obtained initial embedding information, embedding information of a second node to be connected to the first node on the graph 210, and the GCN model 920.

According to an embodiment, in operation 1430, the processing apparatus 910 may obtain a first result (or first intermediate result) by performing aggregation (e.g. a first aggregation) on the obtained initial embedding information (e.g., the embedding information of the node v11 of FIG. 10), the received supernode information (e.g., the supernode information of the supernode A2 of FIG. 10), and the embedding information of the second node (e.g., the node v8 of FIG. 10) (i.e., the connection information). The processing apparatus 910 may obtain a second result (or second intermediate result) by performing aggregation (e.g., a second aggregation) on the obtained initial embedding information and at least one of (or an additional) supernode information about a neighboring supernode connected to the supernode to which the second node belongs or the received supernode information when a supernode to which the second node belongs has no self-edge. The processing apparatus 910 may determine the embedding information of the first node based on the first result and the second result. The determined embedding information of the first node may correspond to, for example, embedding information expressed as the first node connected to the graph 210 (or compressed graph 610).

According to an embodiment, the processing apparatus 910 may correct the first result based on the correction information when the supernode to which the second node belongs has correction information (e.g., $C^+$ edge information and/or $C^-$ edge information). In some cases, the correction information is based on a difference between a connection relationship of the compressed graph 610 and a connection relationship of the graph 210. For example, the processing apparatus 910 may correct the first result by adding embedding information of a portion of (or one or more) nodes on the first edge to the first result when the first edge is removed from the compressed graph (e.g., the supernode to which the second node belongs has first correction information (e.g., the $C^+$ edge information) indicating that a first edge on the graph 210 is not represented in the compressed graph 610). As another example, the processing apparatus 910 may correct the first result by subtracting embedding information of a portion of (or one or more) nodes on the second edge from the first result when the second edge is added to the compressed graph (e.g., the supernode to which the second node belongs has second correction information (e.g., the $C^-$ edge information) indicating that a second edge not defined on the graph 210 is represented in the compressed graph 610).

According to an embodiment, the generating the embedding information comprises determining whether the neighboring supernode has a self-edge, wherein the second aggregation is based on the determination. Thus, in a case where the supernode (e.g., the supernode A3) to which the second node belongs has a self-edge, the processing apparatus 910 may perform aggregation on the obtained initial embedding information, supernode information about the supernode to which the second node belongs, and at least one of supernode information about the neighboring supernode (e.g., the neighboring supernode A2 of the supernode A3) or the received supernode information.

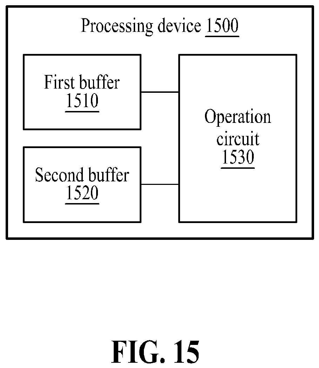

FIG. 15 is a block diagram illustrating an example of a configuration of a processing apparatus according to an embodiment.

According to an embodiment, a processing apparatus 1500 (such as the processing apparatus 910) may include a first buffer 1510 (e.g., the first buffer 1310 described in FIG. 13), a second buffer 1520 (e.g., the second buffer 1320 described in FIG. 13), and an operation circuit 1530 (e.g., the operation circuit 1330 described in FIG. 13).

The first buffer 1510 may store one or more pieces of supernode information iteratively used for an operation among pieces of supernode information of a plurality of supernodes of the compressed graph 610 of the graph 210.

The second buffer 1520 may store embedding information of a second node to be connected to a first node (e.g., the node v11 described in FIG. 10 or the node v12 described in FIG. 11) on the graph 210.

The operation circuit 1530 may perform operations of the GCN model 920. The operation circuit 1530 may obtain the initial embedding information of the first node and connection information between the first node and the second node. The operation circuit 1530 may receive supernode information stored in the first buffer 1510 and receive the embedding information of the second node from the second buffer 1520. The operation circuit 1530 may determine the embedding information of the first node to generate modified embedding information based on the received supernode information, the obtained initial embedding information, the received embedding information using a GCN model (e.g., GCN model 920 as described with reference to FIGs. 9-11).

According to an embodiment, the operation circuit 1530 may obtain a first result by performing aggregation (e.g., a first aggregation) on the obtained initial embedding information, the received supernode information, and the received embedding information. In some cases, when a supernode to which the second node belongs has no self-edge, the operation circuit 1530 may obtain a second result by performing aggregation (e.g., a second aggregation) on the obtained initial embedding information and at least one of (or an additional) supernode information for a neighboring supernode connected to the supernode to which the second node belongs or the received supernode information.

According to an embodiment, the operation circuit 1530 may correct the first result based on the correction information when the supernode to which the second node belongs has correction information about a difference between a connection relationship of the compressed graph 610 and a connection relationship of the graph 210.

According to an embodiment, the operation circuit 1530 may correct the first result by adding embedding information of a portion of nodes on the first edge to the first result when the supernode to which the second node belongs has first correction information indicating that a first edge on the graph 210 is not represented in the compressed graph 610.

According to an embodiment, the operation circuit 1530 may correct the first result by subtracting embedding information of a portion of nodes on the second edge from the first result when the supernode to which the second node belongs has second correction information indicating that a second edge not defined on the graph 210 is represented in the compressed graph 610.

According to an embodiment, the operation circuit 1530 may perform aggregation on the obtained initial embedding information, supernode information about the supernode to which the second node belongs, and at least one of supernode information about the neighboring supernode or the received supernode information when the supernode to which the second node belongs has a self-edge.

According to an embodiment, the operation circuit 1530 may determine the embedding information of the first node based on the first result and the second result.

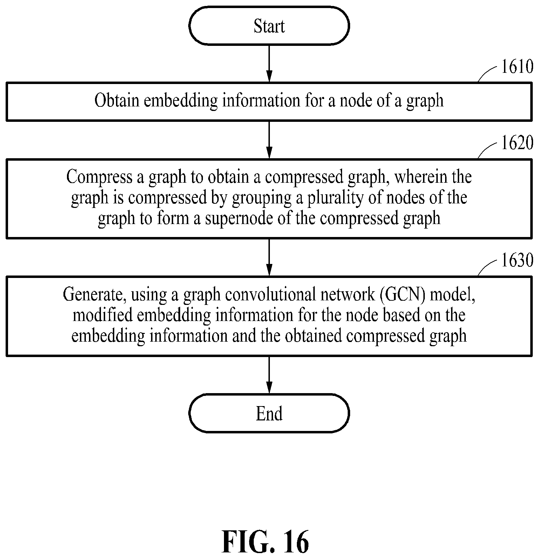

FIG. 16 is a flowchart illustrating an operating method of a processing apparatus according to an embodiment.

Referring to FIG. 16, in operation 1610, the processing apparatus 910 may obtain embedding information of a node of a graph (e.g., graph 210). The embedding information of the node may be received by the processing apparatus 910 from a DRAM (or embedding information in a state where the node may or may not be connected to the graph 210).

In operation 1620, the processing apparatus 910 may compress a graph to obtain a compressed graph, wherein the graph is compressed by grouping a plurality of nodes of the graph to form a supernode of the compressed graph. For example, the processing apparatus may perform lossless edge compression on the graph (or input graph) 210 described with reference to FIG. 2 to generate compressed graph 610 described with reference to FIG. 6. In some cases, the compression process may include an operation of reducing the number of edges in the graph 210 to satisfy constraints related to memory capacity. Further details regarding the compression process are described with reference to FIGs. 3-6.

In operation 1630, the processing apparatus may generate, using a graph convolutional network (GCN) model, modified embedding information of the node based on the embedding information and the compressed graph. In some examples, the processing apparatus 910 may determine embedding information of the node based on the supernode information of the compressed graph and the initial embedding information of the graph using the GCN model 920. Further details regarding the process of generating modified embedding information are provided with reference to FIGs. 7-8.

According to an embodiment, as shown in FIGs. 3 -4, the processing apparatus 910 may iteratively update the compressed graph by repeatedly determining whether the memory requirement exceeds the memory capacity. In case, the memory requirement exceeds the memory capacity (operation 330: Yes), the processing apparatus performs operations 340 and 350 before performing training of the GCN model based on the compressed graph (i.e., operation 1630).

According to an embodiment, the process of graph compression further comprises iteratively performing a homophily-based node division (as described with reference to FIG. 4) followed by performing a node merge process of the plurality of nodes based on the homophily-based node division. In some examples, nodes with similar tendencies or characteristics are connected with each other and merged (e.g., using a greedy algorithm) to generate node pairs. Further details regarding the graph compression are provided with reference to FIGs. 3-6.

The units described herein may be implemented using a hardware component, a software component and/or a combination thereof. A processing device may be implemented using one or more general-purpose or special-purpose computers, such as, for example, a processor, a controller and an arithmetic logic unit (ALU), a DSP, a microcomputer, an FPGA, a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described devices may be configured to act as one or more software modules in order to perform the operations of the above-described examples, or vice versa.

A number of embodiments have been described above. Nevertheless, it should be understood that various modifications may be made to these embodiments. Suitable results may be achieved if the described techniques are performed in a different order, and/or if components in a described system, architecture, device, or circuit are combined in a different manner, and/or replaced or supplemented by other components or their equivalents.

The processes discussed above are intended to be illustrative and not limiting. One skilled in the art would appreciate that the steps of the processes discussed herein may be omitted, modified, combined, and/or rearranged, and any additional steps may be performed without departing from the scope of the invention. More generally, the above disclosure is meant to be exemplary and not limiting. Only the claims that follow are meant to set bounds as to what the present invention includes. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real time. It should also be noted, the systems and/or methods described above may be applied to, or used in accordance with, other systems and/or methods.

The invention is specified within the scope of the following claims.

## Claims

1. A data processing method of a processing apparatus, the data processing method comprising:

   obtaining embedding information of a first node to be added to a graph and connection information between the graph and the first node;
   receiving supernode information for a supernode of a compressed graph corresponding to the graph, wherein the supernode includes a plurality of nodes from the graph; and
   generating, using a graph convolutional network (GCN) model, modified embedding information of the first node based on the supernode information, the embedding information, and the connection information.

2. The data processing method of claim 1, wherein generating the embedding information comprises:

   obtaining a first result by performing a first aggregation on the embedding information, the supernode information, and the connection information; and
   obtaining a second result by performing a second aggregation on the embedding information and additional supernode information for a neighboring supernode connected to the supernode.

3. The data processing method of claim 2, wherein generating the embedding information comprises:
   correcting the first result based on correction information, wherein the correction information indicates a difference between a connection relationship of the compressed graph and a connection relationship of the graph.

4. The data processing method of claim 3, wherein correcting the first result comprises:
   adding additional embedding information of one or more nodes on a first edge to the first result when the first edge is removed from the compressed graph.

5. The data processing method of claim 3, wherein correcting the first result comprises:

subtracting embedding information of one or more nodes on a second edge from the first result when the second edge is added to the compressed graph.

6. The data processing method of claim 2, wherein generating the embedding information comprises: determining whether the neighboring supernode has a self-edge, wherein the second aggregation is based on the determination.

7. A processing apparatus comprising:

   a first buffer configured to store supernode information of a compressed graph, wherein the compressed graph includes a supernode corresponding to a plurality of nodes of a graph;
   a second buffer configured to store embedding information of a first node of the graph; and
   an operation circuit configured to obtain the supernode information from the first buffer, obtain the embedding information from the second buffer, obtain connection information between the first node and a second node of the graph, and generate modified embedding information of the first node based on the supernode information and the embedding information using a graph convolutional network (GCN) model.

8. The processing apparatus of claim 7, wherein the operation circuit is further configured to obtain a first result by performing a first aggregation on the embedding information, the supernode information, and the embedding information, and obtain a second result by performing a second aggregation on the embedding information and additional supernode information for a neighboring supernode connected to the supernode.

9. The processing apparatus of claim 8, wherein the operation circuit is further configured to correct the first result based on correction information, wherein the correction information indicates a difference between a connection relationship of the compressed graph and a connection relationship of the graph.

10. The processing apparatus of claim 9, wherein the operation circuit is further configured to add additional embedding information of a one or more nodes on a first edge to the first result when the first edge is removed from the compressed graph.

11. The processing apparatus of claim 9, wherein the operation circuit is further configured to subtract embedding information of one or more nodes on a second edge from the first result when the second edge is added to the compressed graph.

12. The processing apparatus of claim 8, wherein the operation circuit is further configured to determine whether the neighboring supernode has a self-edge, wherein the second aggregation is based on the determination.

13. The processing apparatus of claim 7, wherein the processing apparatus is included in a processing-near-memory (PNM) device.

Start

Compress graph — 110

Train GCN model based on
compressed graph — 120

End

**FIG. 1**

FIG. 2

```
                                                    ┌─310
              ┌──────────────────────────────────────┐
              │    Perform lossless edge compression  │
              └──────────────────────────────────────┘
                                  │
                                  ▼              ┌─320
              ┌──────────────────────────────────────┐
              │      Calculate memory requirement     │
              └──────────────────────────────────────┘
                                  │
                                  ▼
                              ╱───────────╲        ┌─330
                          ╱                   ╲
                      ╱      Memory requirement >  ╲      No
                      ╲       memory capacity?      ╱─────────┐
                          ╲                   ╱               │
                              ╲───────────╱                   │
                                  │ Yes                       │
                                  ▼              ┌─340        │
              ┌──────────────────────────────────────┐        │
              │  Perform node embedding compression   │        │
              └──────────────────────────────────────┘        │
                                  │                            │
                                  ▼              ┌─350         │
              ┌──────────────────────────────────────┐        │
              │    Perform lossy edge compression     │        │
              └──────────────────────────────────────┘        │
                                  │◄───────────────────────────┘
                                  ▼
                                To 120
```

Graph compression
110

# FIG. 3

Iteration

Perform homophily-based node division — 410

Perform node merge — 420

Convert into compressed form — 430

Lossless edge compression
310

# FIG. 4

**FIG. 5**

S=[{0,1,2}, {3,4}, {5}, {6,7,8,9}]
P={(0,0), (1,2), (2,3), (3,3)}
C+={(2,3)}, C-={(7,9)}

**FIG. 6**

```
                                                    ⌐710
┌─────────────────────────────────────────┐  ⎫
│      Perform supernode aggregation        │  ⎪
└─────────────────────────────────────────┘  ⎪
                    │                          ⎪
                    ▼         ⌐720             ⎬  GCN model training
┌─────────────────────────────────────────┐  ⎪        120
│      Perform superedge aggregation        │  ⎪
└─────────────────────────────────────────┘  ⎪
                    │                          ⎪
                    ▼         ⌐730             ⎪
┌─────────────────────────────────────────┐  ⎭
│   Correct result of superedge aggregation │
└─────────────────────────────────────────┘
```

# FIG. 7

710

Supernode aggregation

$0: A_0 \leftarrow v0+v1+v2$
$1: A_1 \leftarrow v3+v4$
$2: A_2 \leftarrow v5$
$3: A_3 \leftarrow v6+v7+v8+v9$

610

$A_0$

$A_2$

$A_1$

$A_3$

(2,3)

(7,9)

S=[{0,1,2}, {3,4}, {5}, {6,7,8,9}]
P={(0,0), (1,2), (2,3), (3,3)}
C+={(2,3)}, C-={(7,9)}

720

Superedge aggregation

$0: v0',v1',v2' \leftarrow A_0$
$1: v3' \leftarrow v3 + A_2$
$\quad v4' \leftarrow v4 + A_2$
$2: v5' \leftarrow v5 + A_1 + A_3$
$3: v6',v7,v8',v9' \leftarrow A_3 + A_2$

810

Apply C+ edge

$v2' \leftarrow v2' + v3$
$v3' \leftarrow v3' + v2$

820

Apply C- edge

$v7' \leftarrow v7' - v9$
$v9' \leftarrow v9' - v7$

# FIG. 8

Processing apparatus 910

Connection information
and embedding
information of new node

Compressed graph 610

GCN model
920

Inference result

## FIG. 9

**FIG. 10**

S=[{0,1,2}, {3,4}, {5}, {6,7,8,9}]
P={(0,0), (1,2), (2,3), (3,3)}
C+={(2,3)}, C-={(7,9)}

## FIG. 11

DIMM <u>1200</u>

Buffer chip <u>1210</u>

PNM module 0
<u>1210-0</u>

PNM module 1
<u>1210-1</u>

Rank 0
<u>1220</u>

Rank 1
<u>1221</u>

# FIG. 12

FIG. 13

```
                              ┌──────────────┐
                              │    Start     │
                              └──────────────┘
                                     │
                                     ▼                        ┌ 1410
   ┌─────────────────────────────────────────────────────────────┐
   │        Obtain embedding information of a first node to be added to a      │
   │  graph and connection information between the graph and the first node    │
   └─────────────────────────────────────────────────────────────┘
                                     │
                                     ▼                        ┌ 1420
   ┌─────────────────────────────────────────────────────────────┐
   │      Receive supernode information for a supernode of a compressed        │
   │  graph corresponding to the graph, wherein the supernode includes a       │
   │                  plurality of nodes from the graph                        │
   └─────────────────────────────────────────────────────────────┘
                                     │
                                     ▼                        ┌ 1430
   ┌─────────────────────────────────────────────────────────────┐
   │    Generate, using a graph convolutional network (GCN) model,             │
   │  modified embedding information of the first node based on the             │
   │     supernode information, the embedding information, and the             │
   │                    connection information                                 │
   └─────────────────────────────────────────────────────────────┘
                                     │
                                     ▼
                              ┌──────────────┐
                              │     End      │
                              └──────────────┘
```

# FIG. 14

Processing device 1500

First buffer
1510

Second buffer
1520

Operation
circuit
1530

**FIG. 15**

```
                      ┌──────────────────┐
                      │      Start        │
                      └──────────────────┘
                               │
                               ▼                          ┌ 1610
  ┌──────────────────────────────────────────────────────────────┐
  │      Obtain embedding information for a node of a graph        │
  └──────────────────────────────────────────────────────────────┘
                               │
                               ▼                          ┌ 1620
  ┌──────────────────────────────────────────────────────────────┐
  │  Compress a graph to obtain a compressed graph, wherein the   │
  │    graph is compressed by grouping a plurality of nodes of the│
  │      graph to form a supernode of the compressed graph        │
  └──────────────────────────────────────────────────────────────┘
                               │
                               ▼                          ┌ 1630
  ┌──────────────────────────────────────────────────────────────┐
  │  Generate, using a graph convolutional network (GCN) model,   │
  │    modified embedding information for the node based on the    │
  │    embedding information and the obtained compressed graph     │
  └──────────────────────────────────────────────────────────────┘
                               │
                               ▼
                      ┌──────────────────┐
                      │       End         │
                      └──────────────────┘
```

# FIG. 16

Europäisches
Patentamt

European
Patent Office

Office européen
des brevets

# EUROPEAN SEARCH REPORT

**Application Number**

EP 24 21 3880

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Si Si ET AL: "SERVING GRAPH COMPRESSION FOR GRAPH NEURAL NETWORKS", , 3 March 2023 (2023-03-03), XP093255749, Retrieved from the Internet: URL:https://openreview.net/forum?id=T-qVtA 3pAxG [retrieved on 2025-03-04] * abstract * * chapters 1-5; page 1 - page 9; figures 1, 2 * ----- | 1-13 | INV. G06N3/0464 G06N3/0495 |
| A | SAKET NAVLAKHA ET AL: "Graph summarization with bounded error", PROCEEDINGS OF THE 2008 ACM SIGMOD INTERNATIONAL CONFERENCE ON MANAGEMENT OF DATA , SIGMOD '08, 1 January 2008 (2008-01-01), page 419, XP055094465, New York, New York, USA DOI: 10.1145/1376616.1376661 ISBN: 978-1-60-558102-6 * abstract * * chapter 1; page 1 - page 4; figure 1 * ----- | 3-6,9-12 | |
| | | | **TECHNICAL FIELDS SEARCHED (IPC)** G06N |

The present search report has been drawn up for all claims

| Place of search | Date of completion of the search | Examiner |
|---|---|---|
| The Hague | 10 March 2025 | Hasnas, Sergiu |

EPO FORM 1503 03.82 (P04C01)